# EUROPEAN PATENT SPECIFICATION

(11) **EP 3 942 542 B1**
(45) Date of publication and mention of the grant of the patent: **18.10.2023**
(21) Application number: 19713405.9
(22) Date of filing: 20.03.2019
(51) Int. Cl.: G08C 17/00, G05D 1/10, G08G 5/00

(54) **TECHNIQUE FOR CONTROLLING A UAV**
TECHNIK ZUR STEUERUNG EINES UAV
TECHNIQUE DE COMMANDE D'UN UAV

(43) Date of publication of application: 26.01.2022
(73) Proprietor: Telefonaktiebolaget LM Ericsson (publ), 164 83 Stockholm (SE)
(72) Inventor: POSCHER, Jens, 52062 Aachen (DE); DETKE, Ralph, 52134 Herzogenrath (DE); EICHINGER, Stefan, 50259 Pulheim (DE); TERCERO, Pedro, 52064 Aachen (DE)
(74) Representative: Ericsson
(86) International application number: PCT/EP2019/056941
(87) International publication number: WO 2020/187407

(56) References cited:
- WO-A1-2016/154944
- US-A1- 2016 371 987
- US-A1- 2017 308 085
- US-A1- 2018 046 180

## Description

### Technical Field

The present disclosure generally relates to the field of unmanned aerial vehicles (UAVs). In particular, a technique for controlling a UAV by a regulator entity is presented. The technique may be embodied in methods, computer programs, apparatuses and systems.

### Background

An unmanned aerial vehicle (UAV), commonly known as a drone, is an aircraft without a human pilot aboard whose flight may either be operated under remote control by a human operator or autonomously by onboard computers. Nowadays, UAVs have been adopted for a wide variety of applications. While, originally, UAVs have mainly been used for military applications, their use has rapidly been expanded to other applications over the recent years, including applications for surveillance, peacekeeping, scientific research and commercial uses, such as in agriculture, product deliveries in logistics, aerial photography, etc.

On flight, UAVs may be connected to application servers that are part of ground based control systems via communication systems, such as cellular networks. Application servers may be run by UAV manufacturers for the purpose of controlling and tracing the UAVs, for example. Each UAV manufacturer may run its own application server and UAVs can connect to these servers via default Internet connections over-the-top (OTT) of the cellular network. Although usage of UAVs is regulated in most countries, however, UAV usage cannot be monitored and enforced by central regulators, such as central flight regulation authorities, to take action in case of misbehaviors, such as in case of misuse of services provided by the UAVs (e.g., video) or when UAVs fly over non-allowed areas, e.g., to block services, restrict flight spaces or travel speeds and/or to manage flight paths in general.

US 2017/308085 A1 discloses a method that includes monitoring of location information associated with a drone. The method also includes comparing the location information with an authorized zone. The method also includes, based on the comparison, determining a violation by the drone of a rule associated with the authorized zone. The method includes, in response to the violation, augmentative control of the drone to alter operation of the drone. The location information may include at least one of a current or predicted furture location of the drone.

US 2016/0371987 A1 discloses a command and control gateway that implements a command and control interface for UAV's that are connected to a wireless network. In one implementation, the command and control gateway communicates with the UAVs using network traffic that is assigned a high priority. The use of high priority traffic provides for a command and control channel that has relatively low latency and low jitter.

WO 2016/154944 A1 discloses systems and methods for UAV safety. An authentication system is used to confirm UAV and/or user identity and provide secured communications between users and UAVs. The UAVs operates in accordance with a set of flight regulations. The set of flight regulations is associated with a geofencing device in the vicinity of the UAV.

US 2018/0046180 A1 discloses a beacon for attachment to an unmanned aerial vehicle that provides information needed to identify the owner of a particular unmanned vehicle. The beacon also includes a remote communications module configured to participate on wireless or optical communications networks and a beacon control system configured to issue commands compatible with the unmanned aerial vehicle. The beacon may be a beacon control system configured to translated multiple types of commands from different controls systems into commands compatible with the unmanned aerial vehicle.

### Summary

Accordingly, there is a need for a technique for controlling a UAV that avoids one or more of these problems, or other problems.

According to a first aspect, a method for controlling a UAV by a regulator entity is provided, wherein the UAV is connected to a cellular network. The method is performed by the UAV and comprises receiving, from a cellular network entity of the cellular network, a command originating from the regulator entity, the command being directed to the UAV and taking precedence in the UAV over commands originating from other entities controlling the UAV.

The UAV may be configured to execute commands originating from the regulator entity with higher priority than commands originating from the other entities controlling the UAV. The higher priority execution may be implemented at chipset level at the UAV. The other entities controlling the UAV may comprise a UAV controller steering the UAV, wherein commands originating from the UAV controller may be received via a user plane connection established between the UAV and the UAV controller through the cellular network. The command may be received from the cellular network entity via a Non-Access Stratum (NAS) message. The UAV may be configured to execute commands received via NAS messages with higher priority than commands received via user plane connections through the cellular network. The command may be at least one of a command to take control over the UAV, a command to block usage of one or more resources of the cellular network by the UAV, a command to block or restrict a service provided by the UAV, a command to request monitoring data from the UAV, and a command to land the UAV.

The method may further comprise sending, to the cellular network entity, UAV specific information regarding the UAV. The UAV specific information may be sent repeatedly and may comprise updates regarding at least one status of the UAV. The method may further comprise performing, via the cellular network entity, a continuous connectivity check procedure with the regulator entity to check whether connectivity between the UAV and the regulator entity is lost. When it is determined that connectivity between the UAV and the regulator entity is lost, the UAV may perform one or more mitigation actions previously commanded by the regulator entity via the cellular network entity. The one or more mitigation actions to be performed may depend on at least one of a time of connectivity loss, a location of the UAV at connectivity loss, a flight path history of the UAV, and a service provided by the UAV. The cellular network entity may be a mobility management entity of the cellular network.

According to a second aspect, a method for controlling a UAV by a regulator entity is provided, wherein the UAV is connected to a cellular network. The method is performed by a cellular network entity of the cellular network and comprises receiving, from the regulator entity, a command directed to the UAV, the command taking precedence in the UAV over commands originating from other entities controlling the UAV, and triggering forwarding the command to the UAV.

The method according to the second aspect defines a method from a cellular network entity's perspective which may be complementary to the method according to the first aspect. As in the method of the first aspect, the command may be forwarded to the UAV via a NAS message. The command may be at least one of a command to take control over the UAV, a command to block usage of one or more resources of the cellular network by the UAV, a command to block or restrict a service provided by the UAV, a command to request monitoring data from the UAV, and a command to land the UAV. The other entities controlling the UAV may comprise a UAV controller steering the UAV, wherein commands originating from the UAV controller may be transmitted via a user plane connection established between the UAV and the UAV controller through the cellular network, wherein the method may further comprise receiving, from the regulator entity, a blocking command instructing the cellular network entity to trigger blocking at least a portion of the user plane connection between the UAV and the UAV controller, or at least one service provided thereon. The method may further comprise triggering, in response to receiving the blocking command, instructing a gateway node of the cellular network to block the at least a portion of the user plane connection between the UAV and the UAV controller, or the at least one service provided thereon. Blocking the at least a portion of the user plane connection may comprise cutting off the user plane connection by releasing a bearer underlying the user plane connection.

The method may further comprise receiving, from the UAV, UAV specific information regarding the UAV, and triggering forwarding data reflecting the UAV specific information to the regulator entity. The UAV specific information may be received and the data reflecting the UAV specific information may be forwarded repeatedly and comprise updates regarding at least one status of the UAV. The cellular network entity may store the UAV specific information in a data repository correlating data relating to the cellular network with data relating to the UAV. The regulator entity may be subscribed to obtain, optionally via the data repository, updates regarding the UAV specific information. In an attach procedure of the UAV to the cellular network, the cellular network entity may identify that the attach procedure is initiated by a UAV and may provide, optionally via the data repository, initial UAV specific information as determined in the attach procedure to the regulator entity. The cellular network entity may obtain a network address of the UAV controller and may provide, optionally via the data repository, the network address to the regulator entity. The cellular network entity may be a mobility management entity of the cellular network. The command may be directed to a group of UAVs and the command may be forwarded to each UAV in the group of UAVs.

According to a third aspect, a method for controlling a UAV by a regulator entity is provided, wherein the UAV is connected to a cellular network. The method is performed by the regulator entity and comprises sending, to a cellular network entity of the cellular network, a command directed to the UAV, the command to be forwarded by the cellular network entity to the UAV and taking precedence in the UAV over commands originating from other entities controlling the UAV.

The method according to the third aspect defines a method from a regulator entity's perspective which may be complementary to the method according to the second aspect. As in the method of the second aspect, the command may be at least one of a command to take control over the UAV, a command to block usage of one or more resources of the cellular network by the UAV, a command to block or restrict a service provided by the UAV, a command to request monitoring data from the UAV, and a command to land the UAV. The other entities controlling the UAV may comprise a UAV controller steering the UAV, wherein commands originating from the UAV controller may be transmitted via a user plane connection established between the UAV and the UAV controller through the cellular network, and wherein the method may further comprise sending, to the cellular network entity, a blocking command instructing the cellular network entity to trigger blocking at least a portion of the user plane connection between the UAV and the UAV controller, or at least one service provided thereon. Blocking the at least a portion of the user plane connection may comprise cutting off the user plane connection by releasing a bearer underlying the user plane connection. The blocking command may be sent if the regulator entity determines that the command directed to the UAV is not obeyed by the UAV.

The method may further comprise performing, via the cellular network entity, a continuous connectivity check procedure with the UAV to check whether connectivity between the UAV and the regulator entity is lost. The regulator entity may command, via the cellular network entity, the UAV to perform one or more mitigation actions when it is determined that connectivity between the UAV and the regulator entity is lost. The one or more mitigation actions to be performed may depend on at least one of a time of connectivity loss, a location of the UAV at connectivity loss, a flight path history of the UAV, and a service provided by the UAV.

The method may further comprise receiving, from the cellular network entity, data reflecting UAV specific information regarding the UAV. The data reflecting the UAV specific information may be received repeatedly and may comprise updates regarding at least one status of the UAV. The cellular network entity may store the UAV specific information in a data repository correlating data relating to the cellular network with data relating to the UAV. The regulator entity may subscribe to obtain, optionally via the data repository, updates regarding the data reflecting the UAV specific information from the cellular network entity. Initial UAV specific information determined by the cellular network entity in an attach procedure of the UAV to the cellular network may be provided by the cellular network entity, optionally via the data repository, to the regulator entity. A network address of the UAV controller obtained by the cellular network entity may be provided by the cellular network entity, optionally via the data repository, to the regulator entity. The cellular network entity may be a mobility management entity of the cellular network.

According to a fourth aspect, a method for controlling a UAV by a regulator entity is provided, wherein the UAV is connected to a cellular network. The method is performed by a gateway node of the cellular network and comprises receiving, from a cellular network entity of the cellular network, an instruction to block at least a portion of a user plane connection established between the UAV and a UAV controller steering the UAV through the cellular network, or at least one service provided thereon.

The method according to the fourth aspect defines a method from a gateway node's perspective which may be complementary to the method according to the second aspect. As in the method of the second aspect, the method may further comprise blocking the at least a portion of the user plane connection between the UAV and the UAV controller, or the at least one service provided thereon, in accordance with the received instruction. Blocking the at least a portion of the user plane connection may comprise cutting off the user plane connection by releasing a bearer underlying the user plane connection. The cellular network entity may be a mobility management entity of the cellular network.

According to a fifth aspect, a computer program product is provided. The computer program product comprises program code portions for performing the method of at least one of the first, second, third and fourth aspect when the computer program product is executed on one or more computing devices (e.g., a processor or a distributed set of processors). The computer program product may be stored on a computer readable recording medium, such as a semiconductor memory, DVD, CD-ROM, and so on.

According to a sixth aspect, a UAV connectable to a cellular network and controllable by a regulator entity is provided. The UAV comprises at least one processor and at least one memory, wherein the at least one memory contains instructions executable by the at least one processor such that the UAV is operable to perform any of the method steps presented herein with respect to the first aspect.

According to a seventh aspect, a computing unit configured to execute a cellular network entity of a cellular network for controlling a UAV by a regulator entity is provided, wherein the UAV is connected to the cellular network. The computing unit comprises at least one processor and at least one memory, wherein the at least one memory contains instructions executable by the at least one processor such that the cellular network entity is operable to perform any of the method steps presented herein with respect to the second aspect.

According to an eighth aspect, a computing unit configured to execute a regulator entity for controlling a UAV connected to a cellular network is provided. The computing unit comprises at least one processor and at least one memory, wherein the at least one memory contains instructions executable by the at least one processor such that the regulator entity is operable to perform any of the method steps presented herein with respect to the third aspect.

According to a ninth aspect, a computing unit configured to execute a gateway node of a cellular network for controlling a UAV by a regulator entity is provided, wherein the UAV is connected to the cellular network. The computing unit comprises at least one processor and at least one memory, wherein the at least one memory contains instructions executable by the at least one processor such that the gateway node is operable to perform any of the method steps presented herein with respect to the fourth aspect.

According to a tenth aspect, there is provided a system comprising at least one UAV according to the sixth aspect, a computing unit according to the seventh aspect, a computing unit according to the eighth aspect, and, optionally, a computing unit according to the ninth aspect.

### Brief Description of the Drawings

Implementations of the technique presented herein are described herein below with reference to the accompanying drawings, in which:
- Figs. 1a to 1d: illustrate exemplary compositions of a UAV, a computing unit configured to execute a cellular network entity, a computing unit configured to execute a regulator entity, and a computing unit configured to execute a gateway node according to the present disclosure;
- Fig. 2: illustrates a method which may be performed by the UAV according to the present disclosure;
- Fig. 3: illustrates a method which may be performed by the cellular network entity according to the present disclosure;
- Fig. 4: illustrates a method which may be performed by the regulator entity according to the present disclosure;
- Fig. 5: illustrates a method which may be performed by the gateway node according to the present disclosure;
- Fig. 6: illustrates an exemplary cellular network (LTE/5G) including a UAV, a cellular network entity and a regulator entity according to the present disclosure;
- Fig. 7: illustrates a signaling diagram of an exemplary interaction between entities of the cellular network upon boot-up of the UAV according to the present disclosure;
- Fig. 8: illustrates a signaling diagram of an exemplary interaction between entities of the cellular network when the regulator entity is subscribed to obtain updates regarding the UAV specific information according to the present disclosure; and
- Fig. 9: illustrates a signaling diagram of an exemplary interaction between entities of the cellular network when a command is directed to a group of UAVs according to the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

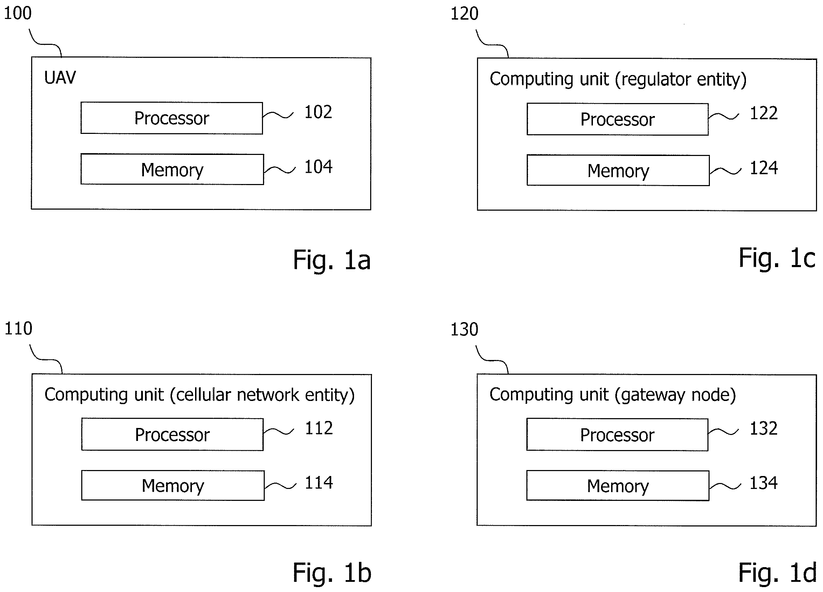

Figure 1a schematically illustrates an exemplary composition of a UAV 100 connectable to a cellular network and controllable by a regulator entity. The UAV 100 comprises at least one processor 102 and at least one memory 104, wherein the at least one memory 104 contains instructions executable by the at least one processor 102 such that the UAV 100 is operable to carry out the method steps described herein below with reference to the UAV.

Figure 1b schematically illustrates an exemplary composition of a computing unit 110 configured to execute a cellular network entity of a cellular network for controlling a UAV by a regulator entity, wherein the UAV is connected to the cellular network. The cellular network entity comprises at least one processor 112 and at least one memory 114, wherein the at least one memory 114 contains instructions executable by the at least one processor 112 such that the cellular network entity is operable to carry out the method steps described herein below with reference to the cellular network entity.

Figure 1c schematically illustrates an exemplary composition of a computing unit 120 configured to execute a regulator entity for controlling a UAV connected to a cellular network. The regulator entity comprises at least one processor 122 and at least one memory 124, wherein the at least one memory 124 contains instructions executable by the at least one processor 122 such that the regulator entity is operable to carry out the method steps described herein below with reference to the regulator entity.

Figure 1d schematically illustrates an exemplary composition of a computing unit 130 configured to execute a gateway node of a cellular network for controlling a UAV by a regulator entity, wherein the UAV is connected to the cellular network. The gateway node comprises at least one processor 132 and at least one memory 134, wherein the at least one memory 134 contains instructions executable by the at least one processor 132 such that the gateway node 130 is operable to carry out the method steps described herein below with reference to the gateway node.

It will be understood that each of the computing unit 110, the computing unit 120 and the computing unit 130 may be implemented on a physical computing unit or a virtualized computing unit, such as a virtual machine, for example. It will further be appreciated that each of the computing unit 110, the computing unit 120 and the computing unit 130 may not necessarily be implemented on a standalone computing unit, but may be implemented as components - realized in software and/or hardware - residing on multiple distributed computing units as well, such as in a cloud computing environment, for example.

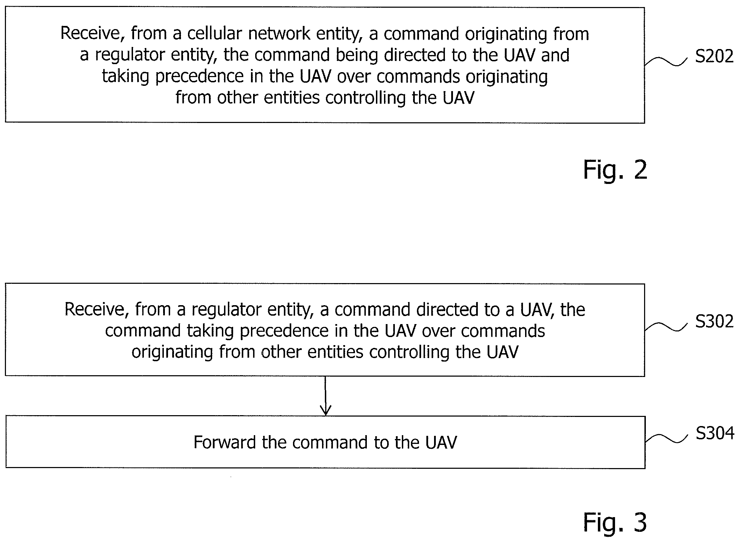

Figure 2 illustrates a method which may be performed by the UAV 100 according to the present disclosure. The method is dedicated to controlling the UAV 100 by a regulator entity (e.g., the regulator entity executed on the computing unit 120), wherein the UAV 100 is connected to a cellular network. In step S202, the UAV 100 receives, from a cellular network entity of the cellular network (e.g., the cellular network entity executed on the computing unit 110), a command originating from the regulator entity, the command being directed to the UAV 100 and taking precedence in the UAV 100 over commands originating from other entities controlling the UAV 100.

The cellular network may be a mobile communication network, such as a Long Term Evolution (LTE) network or a 5G network, for example, and the UAV 100 may be connected to the cellular network to establish connectivity with entities controlling the UAV 100. While, conventionally, entities controlling the UAV 100 may comprise a UAV application server managing the UAV 100 during its operation and/or a UAV controller steering the UAV 100 (optionally, via the UAV application server acting as a proxy), according to the technique presented herein, a regulator entity may be introduced as an additional entity controlling the UAV 100, wherein commands originating from the regulator entity may take precedence over any commands originating from other entities controlling the UAV 100, such as commands originating from the UAV application server and the UAV controller. Commands originating from the regulator entity may in other words have a higher priority than commands originating from other entities controlling the UAV 100 and may thus overrule any commands originating from the other entities. As such, the regulator entity may take control of the UAV 100 at any time and enforce corrective actions in case of detection of misbehavior of the UAV 100, such as in case of a misuse of a service provided by the UAV 100 (e.g., video) or when the UAV 100 flies over a non-allowed area, for example.

The regulator entity may be operated by a flight regulation authority, such as a central regulator authority of a country, for example. As the regulator entity may control the UAV 100 via the cellular network, the command originating from the regulator entity may first be sent from the regulator entity to the cellular network entity and then be forwarded from the cellular network entity towards the UAV 100, i.e., the cellular network entity may be an intermediate component in the transmission path of the command from the regulator entity to the UAV 100. The cellular network entity may be a mobility management entity of the cellular network, such as a Mobility Management Entity (MME) of an LTE network or an Access and Mobility Function (AMF) of a 5G network, for example. The regulator entity may be connected to the cellular network entity via a dedicated (e.g., trustworthy and secured) interface.

The UAV 100 may be configured to execute commands originating from the regulator entity with higher priority than commands originating from the other entities controlling the UAV 100. In one variant, the higher priority execution may be implemented at chipset level at the UAV 100, e.g., the UAV 100 may have an inbuilt function in its chipset that makes sure that commands originating from the regulator entity are treated with highest priority and overrule control commands originating from other entities. As said, the other entities controlling the UAV 100 may comprise a UAV controller steering the UAV 100, for example. In this case, commands originating from the UAV controller may be received via a user plane connection established between the UAV 100 and the UAV controller through the cellular network, i.e., commands originating from the UAV controller may be transmitted over-the-top (OTT) of the cellular network based on Internet Protocol (IP) connectivity, for example. The same may apply to commands originating from a UAV application server. While the same may also be conceivable for commands originating from the regulator entity, in one implementation, commands originating from the regulator entity may be transmitted to the UAV 100 on a path different from the user plane connection so that the UAV 100 receives commands originating from the regulator entity and commands originating from other entities controlling the UAV 100 on different control channels. In one such variant, the command may be received at the UAV 100 from the cellular network entity via a NAS message, i.e., in other words, the cellular network entity (e.g., an MME or AMF) may translate, upon receipt of the command from the regulator entity, the command into an NAS message and thus forward the command to the UAV 100 on NAS level. The UAV 100 may be configured to execute commands received via NAS messages with higher priority than commands received via user plane connections through the cellular network. Due to the transmission over the NAS interface between the UAV 100 and the cellular network entity (representing a control channel for communicating commands to the UAV 100 different from the user plane connection), the regulator entity may not be required to support IP connectivity with the UAV 100 and may thus not need to know the IP address of the UAV 100, for example.

As said, the command originating from the regulator entity may be used by the regulator entity to take control of the UAV 100 and take action in case of misbehaviors. For example, the command may be at least one of a command to take control over the UAV 100, a command to block usage of one or more resources of the cellular network by the UAV 100 (e.g., to disconnect the control channel on the user plane connection, or to block use of a certain Radio Access Technology (RAT) or a certain cell or sector of the cellular network to prohibit use of the UAV 100 in a particular region), a command to block or restrict a service provided by the UAV 100 (e.g., video), a command to request monitoring data from the UAV 100 (e.g., a flight path data, etc.), and a command to land the UAV 100 (e.g., in case the UAV 100 flies over a non-allowed area).

In order to be able to monitor and control the UAV 100 during this operation (e.g., to detect misbehaviors and take corrective actions during flight, as mentioned above), the regulator entity may need to obtain knowledge about the UAV 100 and its current status. To this end, the UAV 100 may send UAV specific information regarding the UAV 100 to the cellular network entity. Such information may be sent initially when registering/attaching the UAV 100 with the cellular network and may comprise information like an International Mobile Subscriber Identity (IMSI) and an International Mobile Equipment Identity (IMEI) of the UAV 100 as well as information like model, vendor, license plate, firmware, capabilities, maximum speed, etc., for example. UAV specific information may also be sent repeatedly and may comprise updates regarding at least one status of the UAV 100, such as monitoring data, including position, current position, speed, altitude, etc., and/or services (e.g., video) currently provided by the UAV 100, for example. Repeated updates may be sent periodically at predefined time intervals or may be triggered at certain events, such as position changes, or the like.

For monitoring purposes, the UAV 100 may perform, via the cellular network entity (e.g., via the NAS based communication channel between the UAV 100 and the cellular network entity), a continuous connectivity check procedure with the regulator entity to check whether connectivity between the UAV 100 and the regulator entity is lost, e.g., using periodic heartbeat messages exchanged between the UAV 100 and the regulator entity. When it is determined that the connectivity between the UAV 100 and the regulator entity is lost, the UAV 100 may perform one or more mitigation actions previously commanded by the regulator entity via the cellular network entity. The one or more mitigation actions to be performed may depend on one or several factors, such as at least one of a time of connectivity loss, a location of the UAV 100 at connectivity loss, a flight path history of the UAV 100, and a service provided by the UAV 100 (e.g., a video service being provided for purposes of surveillance, filming or investigation, etc.). The connectivity check procedure may generally ensure availability and provide mitigation actions predefined by the regulator entity in case the connection is down. The regulator entity may also trigger alarms or provide redundancy mechanisms in case of connection loss, as needed.

Figure 3 illustrates a method which may be performed by the cellular network entity executed on the computing unit 110 according to the present disclosure. The method is dedicated to controlling a UAV (e.g., the UAV 100) by a regulator entity (e.g., the regulator entity executed on the computing unit 120), wherein the UAV is connected to a cellular network. The operation of the cellular network entity may be complementary to the operation of the UAV 100 described above in relation to Figure 2 and, as such, aspects described above with regard to the operation of the cellular network entity may be applicable to the operation of the cellular network entity described in the following as well, and vice versa. Unnecessary repetitions are thus omitted in the following.

In step S302, the cellular network entity may receive, from the regulator entity, a command directed to the UAV, the command taking precedence in the UAV over commands originating from other entities controlling the UAV. In step S304, the cellular network entity may trigger forwarding the command to the UAV.

As described above in relation to Figure 2, the command may be forwarded to the UAV via a NAS message. The command may be at least one of a command to take control over the UAV, a command to block usage of one or more resources of the cellular network by the UAV, a command to block or restrict a service provided by the UAV, a command to request monitoring data from the UAV, and a command to land the UAV. The other entities controlling the UAV may comprise a UAV controller steering the UAV, wherein commands originating from the UAV controller may be transmitted via a user plane connection established between the UAV and the UAV controller through the cellular network.

In one variant, when a command originating from the UAV controller is transmitted via the user plane connection, the cellular network entity may further receive, from the regulator entity, a blocking command instructing the cellular network entity to trigger blocking at least a portion of the user plane connection between the UAV and the UAV controller, or at least one service provided thereon. Such blocking command may be sent by the regulator entity when it is determined that a command directed to the UAV and originating from the regulator entity is not obeyed by the UAV, which may happen in case of a malicious UAV that does not respond to the command originating from the regulator entity (e.g., a command to disconnect the control channel on the user plane connection or a command to stop providing a video service, as described above). By sending the blocking command instructing the cellular network entity to trigger blocking at least a portion of the user plane connection between the UAV and the UAV controller, or at least one service provided thereon, the regulator entity may enforce the blocking on cellular network level, even though the UAV itself does not obey. To this end, the cellular network entity may trigger, in response to receiving the blocking command, instructing a gateway node (e.g., the gateway node executed on the computing unit 130) of the cellular network to block the at least a portion of the user plane connection between the UAV and the UAV controller, or the at least one service provided thereon. Blocking the at least a portion of the user plane connection may comprise blocking the user plane connection so that only a unidirectional user plane is allowed, for example. As an example, downloading a video from the UAV may be blocked, while uploading of commands may still be allowed. As another example, downloading the video may still be allowed (e.g., for visual feedback when steering the UAV), while uplink commands from the UAV controller may be blocked on the user plane connection. Blocking the at least a portion of the user plane connection may also comprise (completely) cutting off the user plane connection by releasing a bearer underlying the user plane connection. The gateway node of the cellular network that implements such blocking may be a Packet Data Network Gateway (PGW) in case of an LTE network or a User Plane Function (UPF) in case of a 5G network, for example.

As further described above in relation to Figure 2, the cellular network entity may receive, from the UAV, UAV specific information regarding the UAV. Once received, the cellular network entity may trigger forwarding data reflecting the UAV specific information to the regulator entity. The UAV specific information may be received and the data reflecting the UAV specific information may be forwarded repeatedly and comprise updates regarding at least one status of the UAV.

The cellular network entity may store the UAV specific information in a data repository correlating data relating to the cellular network with data relating to the UAV. For example, the data repository may correlate cellular network data (e.g., UAV subscription data maintained by an MME/UDM) with the UAV specific information received from the UAV (e.g., positioning data, etc.) based on a UAV identifier. An exemplary entry stored in the data repository for the UAV may comprise at least one of the IMSI of the UAV, the IMEI of the UAV, the IP address of the UAV, the IP address of the UAV controller, the current position of the UAV (GPS, tracking area (TA), cell, etc.), the currently used RAT, etc. When it comes to forwarding data reflecting the UAV specific information to the regulator entity, the regulator entity may in one variant not only obtain the updates regarding the UAV specific information directly from the cellular network entity, but also via the data repository. The regulator entity may be subscribed to obtain, optionally via the data repository, updates regarding the UAV specific information, i.e., in other words, forwarding data reflecting the UAV specific information to the regulator entity may be implemented on a subscription basis, wherein the regulator entity subscribes at the cellular network entity (or, optionally, at the data repository) for receipt of updates regarding the UAV specific information. In an LTE network, the data repository may be a database associated with the MME and, in a 5G network, the data repository may be the User Data Management (UDM) function, for example.

As said, initial UAV specific information (e.g., IMSI, IMEI, model, vendor, license plate, firmware, capabilities, maximum speed, etc.) may be sent from the UAV to the cellular network entity when registering/attaching the UAV to the cellular network. The UAV may be configured to automatically attach to the cellular network upon boot-up and register with the regulator entity to set up connectivity therewith (e.g., using the NAS based communication channel between the UAV and the cellular network entity). Such behavior may be implemented as inbuilt function at chipset level at the UAV. It will be understood that, in other variants, connectivity with the regulator entity may also be set up on demand, for example. In an attach procedure of the UAV to the cellular network, the cellular network entity (e.g., an MME or AMF) may identify that the attach procedure is initiated by a UAV (i.e., specifically a UAV as compared to other types of user equipments (UEs) which may be identified based on subscription data or UAV NAS signaling message information, for example) and may provide, optionally via the data repository, initial UAV specific information as determined in the attach procedure to the regulator entity. The same may generally apply for later updates regarding the UAV specific information, i.e., upon receipt of UAV specific information from the UAV, the cellular network entity may identify that the information is received from a UAV (i.e., specifically a UAV as compared to other types of UEs) and forward data reflecting the received UAV specific information to the regulator entity, as described above. As the cellular network entity (e.g., an MME or AMF) may obtain regular updates from other types of UEs, such as tracking area updates (TAUs), for example, the cellular network entity may in other words filter among the updates received which information has been received from a UAV (and not from another type of UE) and only forward information relating to UAVs to the regulator entity.

If entries stored in the data repository include the IP address of the UAV controller, as mentioned above, such IP address may be obtained from a UAV application server, for example. Such IP address may also be identified by a gateway node (e.g., the gateway node executed on the computing unit 130) of the cellular network by observing traffic between the UAV and the UAV controller and the gateway node may provide the learned IP address to the cellular network entity (e.g., the MME or AMF). The cellular network entity may thus obtain a network address of the UAV controller and may provide, optionally via the data repository, the network address to the regulator entity. When the cellular network entity receives a command directed to the UAV from the regulator entity, such command may not only be directed to a single UAV, but also to a group of UAVs (e.g., represented by a geographical area, device class, etc.). When the command is directed to a group of UAVs, the command may be forwarded to each UAV in the group of UAVs.

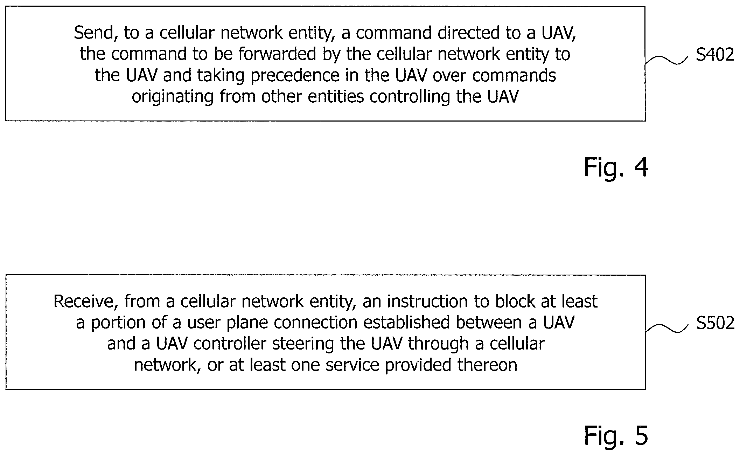

Figure 4 illustrates a method which may be performed by the regulator entity executed on the computing unit 120 according to the present disclosure. The method is dedicated to controlling a UAV (e.g., the UAV 100) by the regulator entity (e.g., the regulator entity executed on the computing unit 120), wherein the UAV is connected to a cellular network. The operation of the regulator entity may be complementary to the operation of the cellular network entity described above in relation to Figures 2 and 3 and, as such, aspects described above with regard to the operation of the regulator entity may be applicable to the operation of the regulator entity described in the following as well, and vice versa. Unnecessary repetitions are thus omitted in the following.

In step S402, the regulator entity may send, to a cellular network entity of the cellular network (e.g., the cellular network entity executed on the computing unit 110), a command directed to the UAV, the command to be forwarded by the cellular network entity to the UAV and taking precedence in the UAV over commands originating from other entities controlling the UAV. As described above in relation to Figures 2 and 3, the command may be at least one of a command to take control over the UAV, a command to block usage of one or more resources of the cellular network by the UAV, a command to block or restrict a service provided by the UAV, a command to request monitoring data from the UAV, and a command to land the UAV. The other entities controlling the UAV may comprise a UAV controller steering the UAV, wherein commands originating from the UAV controller may be transmitted via a user plane connection established between the UAV and the UAV controller through the cellular network, and wherein the regulator entity may further send, to the cellular network entity, a blocking command instructing the cellular network entity to trigger blocking at least a portion of the user plane connection between the UAV and the UAV controller, or at least one service provided thereon. Blocking the at least a portion of the user plane connection may comprise cutting off the user plane connection by releasing a bearer underlying the user plane connection. The blocking command may be sent if the regulator entity determines that the command directed to the UAV is not obeyed by the UAV.

The regulator entity may further perform, via the cellular network entity, a continuous connectivity check procedure with the UAV to check whether connectivity between the UAV and the regulator entity is lost. The regulator entity may command, via the cellular network entity, the UAV to perform one or more mitigation actions when it is determined that connectivity between the UAV and the regulator entity is lost. The one or more mitigation actions to be performed may depend on at least one of a time of connectivity loss, a location of the UAV at connectivity loss, a flight path history of the UAV, and a service provided by the UAV.

The regulator entity may further receive, from the cellular network entity, data reflecting UAV specific information regarding the UAV. The data reflecting the UAV specific information may be received repeatedly and may comprise updates regarding at least one status of the UAV. The cellular network entity may store the UAV specific information in a data repository correlating data relating to the cellular network with data relating to the UAV. The regulator entity may subscribe to obtain, optionally via the data repository, updates regarding the data reflecting the UAV specific information from the cellular network entity. Initial UAV specific information determined by the cellular network entity in an attach procedure of the UAV to the cellular network may be provided by the cellular network entity, optionally via the data repository, to the regulator entity. A network address of the UAV controller obtained by the cellular network entity may be provided by the cellular network entity, optionally via the data repository, to the regulator entity. The cellular network entity may be a mobility management entity of the cellular network.

Figure 5 illustrates a method which may be performed by the gateway node executed on the computing unit 130 according to the present disclosure. The method is dedicated to controlling a UAV (e.g., the UAV 100) by a regulator entity (e.g., the regulator entity executed on the computing unit 120), wherein the UAV is connected to a cellular network. The operation of the gateway node may be complementary to the operation of the cellular network entity described above in relation to Figures 2 and 3 and, as such, aspects described above with regard to the operation of the gateway node may be applicable to the operation of the regulator entity described in the following as well, and vice versa. Unnecessary repetitions are thus omitted in the following.

In step S502, the gateway node may receive, from a cellular network entity of the cellular network (e.g., the cellular network entity executed on the computing unit 110), an instruction to block at least a portion of a user plane connection established between the UAV and a UAV controller steering the UAV through the cellular network, or at least one service provided thereon. As described above in relation to Figures 2 and 3, the gateway node may further block the at least a portion of the user plane connection between the UAV and the UAV controller, or the at least one service provided thereon, in accordance with the received instruction. Blocking the at least a portion of the user plane connection may comprise cutting off the user plane connection by releasing a bearer underlying the user plane connection. The cellular network entity may be a mobility management entity of the cellular network.

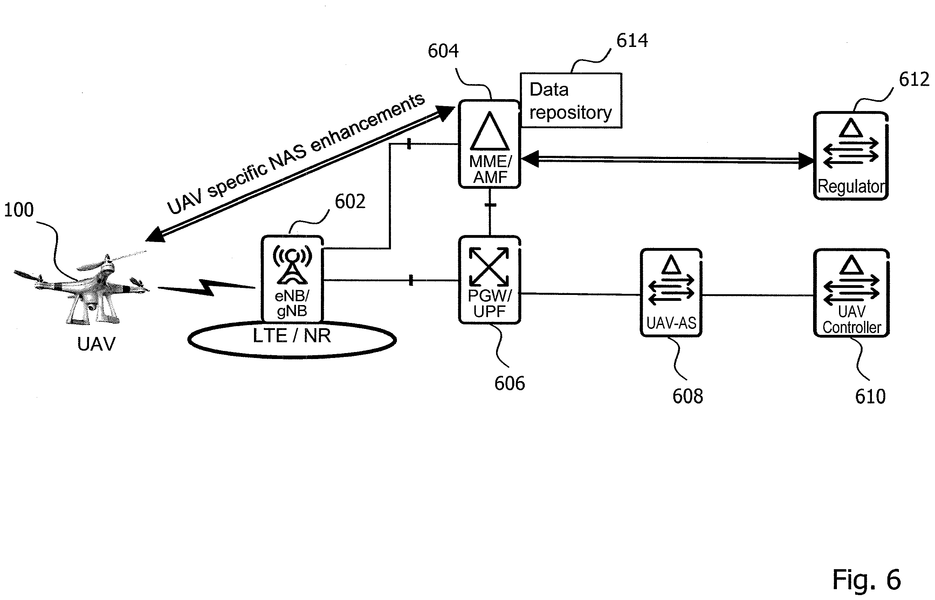

Figure 6 schematically illustrates a simplified cellular network in which the technique for controlling a UAV presented herein may be practiced. As indicated in the figure, the cellular network may correspond to an LTE or a 5G ("New Radio" (NR)) network. The cellular network comprises common network entities, such as a base station 602 (e.g., an eNodeB (eNB) in case of an LTE network or a next generation NodeB (gNB) in case of a 5G network), a mobility management entity 604 (e.g., an MME in case of an LTE network or an AMF in case of a 5G network), and a gateway node 606 (e.g., a PGW in case of an LTE network or a UPF in case of a 5G network). As shown in the figure, a UAV application server 608 (which, in the shown example, acts as a proxy for communication between the UAV 100 and a UAV controller 610 steering the UAV 100) is connected to the gateway node 606 so that communication between the UAV 100 and the UAV application server 608 and the UAV controller 610 is performed over a user plane connection through the cellular network (i.e., on the path from the gateway node 606 to the base station 602). The UAV application server 608 may be employed by a manufacturer of the UAV 100 for the purpose of controlling, tracing and/or monitoring the UAV 100 by the manufacturer, for example. The UAV controller 610 may be a device steering the UAV 100 or may be provided as cloud application, for example.

In accordance with the technique presented herein, a regulator entity 612 is provided which may control the UAV 100 using commands that take precedence over commands originating from other entities controlling the UAV 100, including the UAV application server 608 and a UAV controller 610. In the shown example, the regulator entity 612 is connected to the mobility management entity 604 of the cellular network via a dedicated interface and communication between the mobility management entity 604 and the UAV 100 is performed based on NAS level so that, for communication between the regulator entity 612 and the UAV 100, a communication channel is used that is different from the user plane connection used for communication between the UAV 100 and the UAV application server 608 as well as the UAV controller 610. Further, the cellular network entity 604 may interface with a data repository 614 for storage of the UAV specific information, as described above. In case of an LTE network, the data repository 614 may be a database associated with the MME and, in case of a 5G network, the data repository 614 may be a UDM, for example.

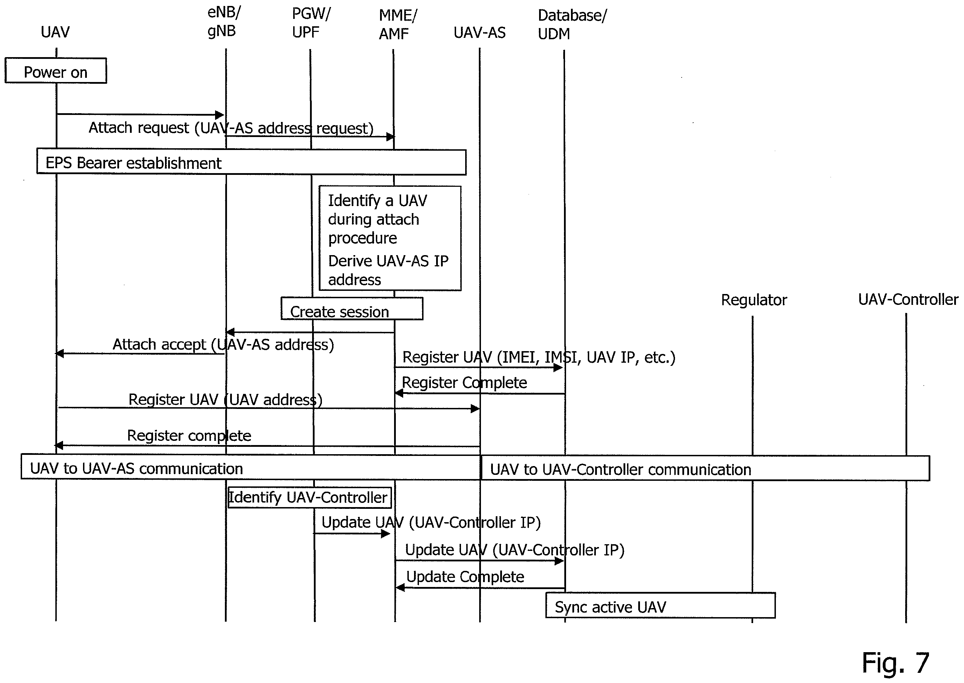

Figure 7 illustrates a signaling diagram of an exemplary interaction between the entities of the cellular network upon boot-up of the UAV 100 according to the present disclosure. As shown in the figure, after power-up, the UAV 100 may perform a conventional attach procedure to register with the cellular network, including an Evolved Packet System (EPS) bearer establishment procedure as well as a session creation procedure to create a context for the UAV 100 in the MME/AMF. As part of the attach procedure, the MME/AMF identifies the attach request as coming from a UAV (as compared to other types of UEs) and creates a context for the UAV 100 accordingly. The MME/AMF may further determine an IP address for the UAV application server serving the UAV 100 and pass the UAV application server IP address to the UAV 100 together with an attach accept message. The MME/AMF may also update the database/UDM with the UAV specific information identified in the attach procedure (IMSI, IMEI, UAV IP, etc.), as described above. Using the UAV application server IP address, the UAV 100 may then register itself with the UAV application server to establish connectivity between the UAV 100 and the UAV application server, thereby enabling communication between the UAV 100 and the UAV application server as well as between the UAV 100 and the UAV controller (the UAV application server acting as proxy). Based on the traffic running through the user plane connection, the PGW/UPF may identify the IP address of the UAV controller and provide this information to the MME/AMF which, in turn, may update the context of the UAV in the database/UDM with the UAV controller IP address. More specifically, the UAV controller IP address may be identified by a Policy and Charging Rules Function (PCRF) of the cellular network within the EPS bearer created for the UAV 100, for example. Finally, as shown in the figure, the information stored in the database/UDM in relation to the UAV 100 may be provided (forwarded/synched) to the regulator entity, as described above.

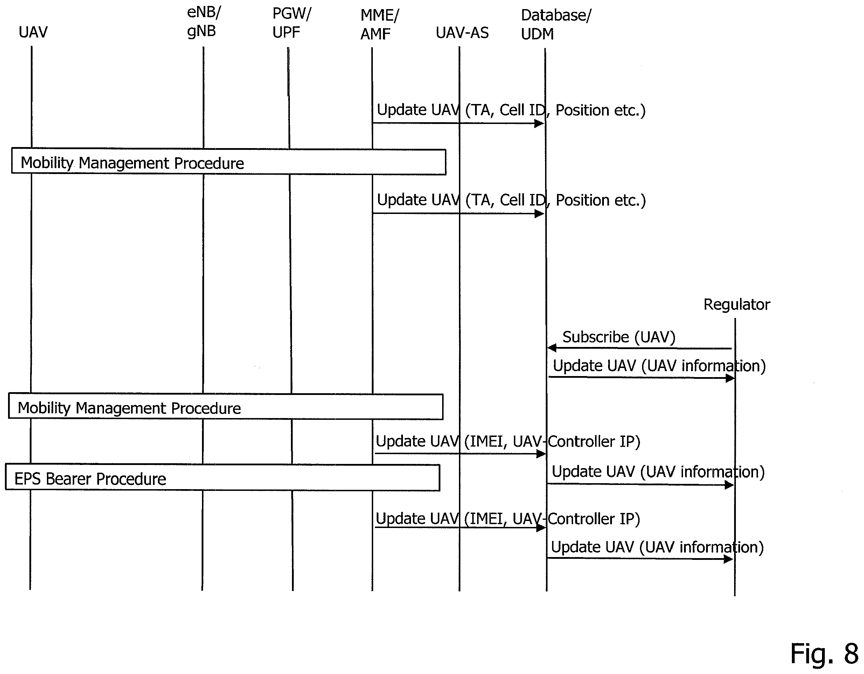

Figure 8 illustrates a signaling diagram of an exemplary interaction between the entities of the cellular network when the regulator entity is subscribed to obtain updates regarding the UAV specific information according to the present disclosure. In the shown example, the regulator entity subscribes directly with the database/UDM (and not with the MME/AMF) to obtain updates regarding the UAV specific information, so that the regulator entity receives the UAV specific information in via the data repository. As shown in the figure, upon subscribing with the database/UDM, the database/UDM provides currently available UAV specific information to the regulator entity, including information that has been collected in a previous mobility management procedure (e.g., TA, cell ID, position, etc.). Upon subsequent status changes regarding the UAV, such as upon execution of further mobility management procedures or EPS bearer procedures, the newly collected information may again be provided to the regulator entity, as shown in the figure.

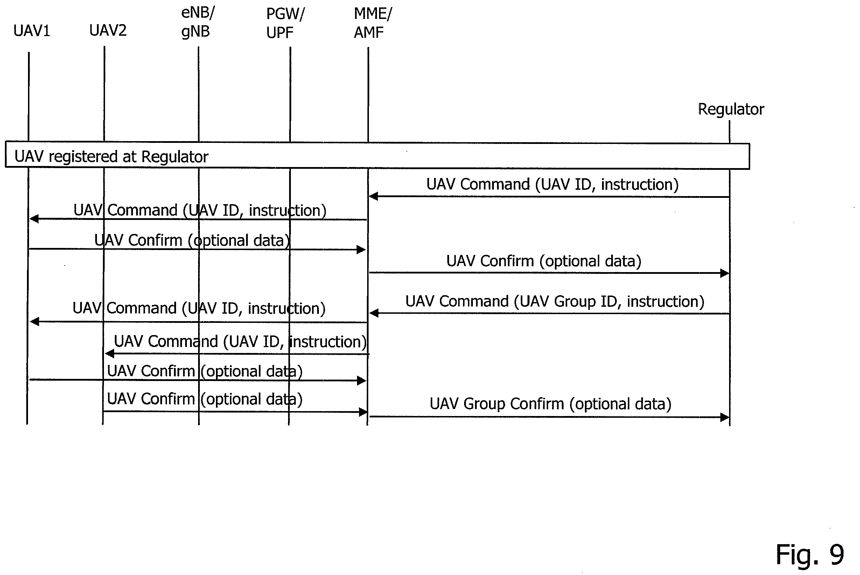

Figure 9 illustrates a signaling diagram of an exemplary interaction between the entities when a command is directed to a single UAV or a group of UAVs according to the present disclosure. As shown in the upper portion of the figure, a command directed to a first UAV sent from the regulator entity to the MME/AMF may be forwarded to the first UAV. The command may in this case include a UAV ID identifying the first UAV as the target of the command. As shown in the lower portion of the figure, on the other hand, a command directed to a group of UAVs sent from the regulator entity to the MME/AMF may be forwarded to a whole group of UAVs (in the shown example, a group of two UAVs). The command may in this case include a group of UAV IDs identifying the target UAVs.

As has become apparent from the above, the present disclosure provides a technique for controlling a UAV by a regulator entity. According to the presented technique, UAV usage may be controlled and enforced by a regulator entity via a trustworthy interface to the cellular network, thereby providing functionality which may be required by national flight regulation authorities to take control over misbehaving and fraudulent UAVs. For UAVs connected to the cellular network, misbehaviors (e.g., misuse of services and/or visual inspection, or cell localization and spotting UAVs flying over non-allowed areas) can be reported by the network to the regulators so that regulators know about the UAVs and their status and may take action accordingly.

The presented technique may be considered to provide an automatic procedure required to learn and access UAV data and to eventually overrule control of a UAV operator. UAVs attaching to the cellular network may be automatically discovered and identified by the cellular network and this information may be conveyed to the regulator. Based on the reported information, the regulator may prevent misbehavior, e.g., by automatically landing the UAV and preventing the UAV to use specific network services, such as by blocking network bearer services or barring a cell which would prohibit the use and registration of the UAV in a particular region, for example. Also, cellular network operators may be allowed to implement their networks in compliance with future regulatory requirements.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A method for controlling an unmanned aerial vehicle, UAV, (100) by a regulator entity (612), the UAV (100) being connected to a cellular network, the method being performed by the UAV (100) and comprising:
receiving (S202), from a cellular network entity (604) of the cellular network, a command originating from the regulator entity (612), the command being directed to the UAV (100) and taking precedence in the UAV (100) over commands originating from other entities (608, 610) controlling the UAV (100), wherein the command is received from the cellular network entity (604) via a Non-Stratum, NAS, message; and
executing the command received via the NAS message with higher priority than commands received via user plane connections through the cellular network.

2. The method of claim 1, wherein the higher priority execution is implemented at chipset level at the UAV (100).

3. The method of any one of claims 1 to 2, wherein the other entities (608, 610) controlling the UAV (100) comprise a UAV controller (610) steering the UAV (100) and wherein commands originating from the UAV controller (610) are received via a user plane connection established between the UAV (100) and the UAV controller (610) through the cellular network.

4. The method of any one of claims 1 to 3, wherein the command is at least one of:
a command to take control over the UAV (100),
a command to block usage of one or more resources of the cellular network by the UAV (100),
a command to block or restrict a service provided by the UAV (100),
a command to request monitoring data from the UAV (100), and
a command to land the UAV (100).

5. The method of any one of claims 1 to 4, further comprising:
sending, to the cellular network entity (604), UAV specific information regarding the UAV (100).

6. The method of claim 5, wherein the UAV specific information is sent repeatedly and comprises updates regarding at least one status of the UAV (100).

7. The method of any one of claims 1 to 6, further comprising:
performing, via the cellular network entity (604), a continuous connectivity check procedure with the regulator entity (612) to check whether connectivity between the UAV (100) and the regulator entity (612) is lost.

8. The method of any one of claims 1 to 7, wherein, when it is determined that connectivity between the UAV (100) and the regulator entity (612) is lost, the UAV (100) performs one or more mitigation actions previously commanded by the regulator entity (612) via the cellular network entity (604).

9. The method of claim 8, wherein the one or more mitigation actions to be performed depend on at least one of:
a time of connectivity loss,
a location of the UAV (100) at connectivity loss,
a flight path history of the UAV (100), and
a service provided by the UAV (100).

10. The method of any one of claims 1 to 9, wherein the cellular network entity (604) is a mobility management entity of the cellular network.

11. A computer program product comprising program code portions for performing the method of any one of claims 1 to 10 when the computer program product is executed on one or more computing devices.

12. The computer program product of claim 11, stored on a computer readable recording medium.

13. An unmanned aerial vehicle, UAV, (100) connectable to a cellular network and controllable by a regulator entity (612), the UAV (100) comprising at least one processor (102) and at least one memory (104), the at least one memory (104) containing instructions executable by the at least one processor (102) such that the UAV (100) is operable to :
receive, from a cellular network entity (604), a command originating from the regulator entity, the command being directed to the UAV (100) and taking precedence in the UAV (100) over commands originating from the other entities (608, 610) controlling the UAV (100), wherein the command is received from the cellular network entity via a Non-Stratum, NAS, message; and
execute the command received via the NAS message within higher priority than commands received via user plane connections through the cellular network.

14. The UAV (100) of claim 13, wherein the UAV (100) is operable to perform the method of any one of claims 2 to 10.

## Patentansprüche

1. Verfahren zum Steuern eines unbemannten Luftfahrzeugs, UAV, (100) durch eine Regulierungsinstanz (612), wobei das UAV (100) mit einem Funknetz verbunden ist, wobei das Verfahren von dem UAV (100) durchgeführt wird und Folgendes umfasst:
Empfangen (S202), von einer Funknetzinstanz (604) des Funknetzes, eines Befehls, der von der Regulierungsinstanz (612) stammt, wobei der Befehl an das UAV (100) gerichtet ist und bei dem UAV (100) gegenüber Befehlen Vorrang hat, die von anderen Instanzen (608, 610) stammen, die das UAV (100) steuern, wobei der Befehl von der Funknetzinstanz (604) über eine Non-Stratum-, NAS, Nachricht empfangen wird; und
Ausführen des Befehls, der über die NAS-Nachricht empfangen wird, mit höherer Priorität als Befehle, die über Benutzerebenenverbindungen durch das Funknetz empfangen werden.

2. Verfahren nach Anspruch 1, wobei die Ausführung höherer Priorität auf Chipsatzebene bei dem UAV (100) implementiert wird.

3. Verfahren nach einem der Ansprüche 1 bis 2, wobei die anderen das UAV (100) steuernden Instanzen (608, 610) eine UAV-Steuereinheit (610) umfassen, die das UAV (100) lenkt, und wobei Befehle, die von der UAV-Steuereinheit (610) stammen, über eine Benutzerebenenverbindung empfangen werden, die zwischen dem UAV (100) und der UAV-Steuereinheit (610) durch das Funknetz eingerichtet ist.

4. Verfahren nach einem der Ansprüche 1 bis 3, wobei der Befehl zumindest einer der folgenden ist:
ein Befehl, Steuerung des UAV (100) zu übernehmen,
ein Befehl, Nutzung einer oder mehrerer Ressourcen des Funknetzes durch das UAV (100) zu blockieren,
ein Befehl, einen Dienst zu blockieren oder einzuschränken, der von dem UAV (100) bereitgestellt wird,
ein Befehl, Überwachung von Daten von dem UAV (100) anzufordern, und
ein Befehl, das UAV (100) zu landen.

5. Verfahren nach einem der Ansprüche 1 bis 4, weiter umfassend:
Senden, an die Funknetzinstanz (604), von UAV-spezifischen Informationen bezüglich des UAV (100).

6. Verfahren nach Anspruch 5, wobei die UAV-spezifischen Informationen wiederholt gesendet werden und Aktualisierungen bezüglich zumindest eines Status des UAV (100) umfassen.

7. Verfahren nach einem der Ansprüche 1 bis 6, weiter umfassend:
Durchführen, über die Funknetzinstanz (604), einer kontinuierlichen Konnektivitätsprüfprozedur mit der Regulierungsinstanz (612), um zu prüfen, ob Konnektivität zwischen dem UAV (100) und der Regulierungsinstanz (612) verloren gegangen ist.

8. Verfahren nach einem der Ansprüche 1 bis 7, wobei, wenn bestimmt wird, dass Konnektivität zwischen dem UAV (100) und der Regulierungsinstanz (612) verloren gegangen ist, das UAV (100) eine oder mehrere Minderungsmaßnahmen durchführt, die zuvor von der Regulierungsinstanz (612) über die Funknetzinstanz (604) befohlen wurden.

9. Verfahren nach Anspruch 8, wobei die eine oder mehreren Minderungsmaßnahmen zumindest von einem des Folgenden abhängig durchzuführen sind:
einer Zeit des Konnektivitätsverlusts,
einem Standort des UAV (100) beim Konnektivitätsverlust,
einem Flugpfadverlauf des UAV (100), und
einem von dem UAV (100) bereitgestellten Dienst.

10. Verfahren nach einem der Ansprüche 1 bis 9, wobei die Funknetzinstanz (604) eine Mobilitätsverwaltungsinstanz des Funknetzes ist.

11. Computerprogrammprodukt, das Programmcodeteile zum Durchführen des Verfahrens nach einem der Ansprüche 1 bis 10 umfasst, wenn das Computerprogrammprodukt auf einer oder mehreren Rechenvorrichtungen ausgeführt wird.

12. Computerprogrammprodukt nach Anspruch 11, das auf einem computerlesbaren Aufzeichnungsmedium gespeichert ist.

13. Unbemanntes Luftfahrzeug, UAV, (100), das mit einem Funknetz verbunden werden kann und von einer Regulierungsinstanz (612) gesteuert werden kann, wobei das UAV (100) zumindest einen Prozessor (102) und zumindest einen Speicher (104) umfasst, der zumindest eine Speicher (104) Anweisungen enthält, die von dem zumindest einen Prozessor (102) ausgeführt werden können, so dass das UAV (100) für Folgendes betreibbar ist:
Empfangen, von einer Funknetzinstanz (604), eines Befehls, der von der Regulierungsinstanz stammt, wobei der Befehl an das UAV (100) gerichtet ist und in dem UAV (100) gegenüber Befehlen Vorrang hat, die von den anderen Instanzen (608, 610) stammen, die das UAV (100) steuern, wobei der Befehl von der Funknetzinstanz über eine Non-Stratum-, NAS, Nachricht empfangen wird; und
Ausführen des Befehls, der über die NAS-Nachricht empfangen wird, mit höherer Priorität als Befehle, die über Benutzerebenenverbindungen durch das Funknetz empfangen werden.

14. UAV (100) nach Anspruch 13, wobei das UAV (100) betriebsfähig ist, das Verfahren nach einem der Ansprüche 2 bis 10 durchzuführen.

## Revendications

1. Procédé de commande d'un véhicule aérien téléguidé, UAV, (100) par une entité de régulation (612), l'UAV (100) étant connecté à un réseau cellulaire, le procédé étant exécuté par l'UAV (100) et comprenant de :
recevoir (S202), d'une entité de réseau cellulaire (604) du réseau cellulaire, une commande provenant de l'entité de régulation (612), la commande étant dirigée vers l'UAV (100) et ayant priorité dans l'UAV (100) sur des commandes provenant d'autres entités (608, 610) commandant l'UAV (100), dans lequel la commande est reçue de l'entité de réseau cellulaire (604) via un message Non-Stratum, NAS ; et
exécuter la commande reçue via le message NAS avec une priorité plus élevée que les commandes reçues via des connexions de plan d'utilisateur via le réseau cellulaire.

2. Procédé selon la revendication 1, dans lequel l'exécution à priorité plus élevée est mise en œuvre au niveau du chipset au niveau de l'UAV (100).

3. Procédé selon une quelconque des revendications 1 à 2, dans lequel les autres entités (608, 610) commandant l'UAV (100) comprennent un contrôleur d'UAV (610) pilotant l'UAV (100) et dans lequel les commandes provenant du contrôleur d'UAV (610) sont reçues via une connexion de plan d'utilisateur établie entre l'UAV (100) et le contrôleur d'UAV (610) via le réseau cellulaire.

4. Procédé selon une quelconque des revendications 1 à 3, dans lequel la commande est au moins une de :
une commande pour prendre le contrôle de l'UAV (100),
une commande pour bloquer l'utilisation d'une ou plusieurs ressources du réseau cellulaire par l'UAV (100),
une commande pour bloquer ou restreindre un service fourni par l'UAV (100),
une commande pour demander des données de surveillance à partir de l'UAV (100), et
une commande pour faire atterrir l'UAV (100).

5. Procédé selon une quelconque des revendications 1 à 4, comprenant en outre de :
envoyer, à l'entité de réseau cellulaire (604), des informations spécifiques à l'UAV concernant l'UAV (100) .

6. Procédé selon la revendication 5, dans lequel les informations spécifiques à l'UAV sont envoyées de manière répétée et comprennent des mises à jour concernant au moins un statut de l'UAV (100).

7. Procédé selon une quelconque des revendications 1 à 6, comprenant en outre de :
effectuer, via l'entité de réseau cellulaire (604), une procédure de commande de connectivité continue avec l'entité de régulation (612) pour vérifier si la connectivité entre l'UAV (100) et l'entité de régulation (612) est perdue.

8. Procédé selon une quelconque des revendications 1 à 7, dans lequel, lorsqu'il est déterminé que la connectivité entre l'UAV (100) et l'entité de régulation (612) est perdue, l'UAV (100) effectue une ou plusieurs actions d'atténuation préalablement commandées par l'entité de régulation (612) via l'entité de réseau cellulaire (604).

9. Procédé selon la revendication 8, dans lequel la ou les actions d'atténuation à effectuer dépendent d'au moins un parmi :
un temps de perte de connectivité,
un emplacement de l'UAV (100) en cas de perte de connectivité,
un historique de trajectoire de vol de l'UAV (100) et
un service fourni par l'UAV (100).

10. Procédé selon une quelconque des revendications 1 à 9, dans lequel l'entité de réseau cellulaire (604) est une entité de gestion de mobilité du réseau cellulaire.

11. Produit de programme informatique comprenant des portions de code de programme pour exécuter le procédé d'une quelconque des revendications 1 à 10 lorsque le produit de programme informatique est exécuté sur un ou plusieurs dispositifs informatiques.

12. Produit de programme informatique selon la revendication 11, mémorisé sur un support d'enregistrement lisible par ordinateur.

13. Véhicule aérien téléguidé, UAV, (100) connectable à un réseau cellulaire et pouvant être commandé par une entité de régulation (612), l'UAV (100) comprenant au moins un processeur (102) et au moins une mémoire (104), la au moins une mémoire (104) contenant des instructions exécutables par le au moins un processeur (102) de sorte que l'UAV (100) soit utilisable pour :
recevoir, d'une entité de réseau cellulaire (604), une commande provenant de l'entité de régulation, la commande étant dirigée vers l'UAV (100) et ayant priorité dans l'UAV (100) sur les commandes provenant des autres entités (608, 610) commandant l'UAV (100), dans lequel la commande est reçue de l'entité de réseau cellulaire via un message NAS, Non-Stratum; et
exécuter la commande reçue via le message NAS avec une priorité plus élevée que les commandes reçues via des connexions de plan d'utilisateur via le réseau cellulaire.

14. UAV (100) selon la revendication 13, dans lequel l'UAV (100) est utilisable pour exécuter le procédé d'une quelconque des revendications 2 à 10.
